(19)

Europäisches Patentamt

European Patent Office

Office européen des brevets

(11) **EP 4 553 044 A1**

(12) **EUROPEAN PATENT APPLICATION**

(43) Date of publication:
14.05.2025 Bulletin 2025/20

(21) Application number: 23208845.0

(22) Date of filing: 09.11.2023

(51) International Patent Classification (IPC):
*C01G 31/02* (2006.01)    *C03C 17/00* (2006.01)

(52) Cooperative Patent Classification (CPC):
**C01G 31/02; C09K 9/00;** C01P 2004/51;
C01P 2004/64; C03C 17/007; C03C 17/23;
C03C 17/42; C03C 2217/24; C03C 2217/445;
C03C 2217/485

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicants:
• **Nederlandse Organisatie voor
toegepast-natuurwetenschappelijk Onderzoek
TNO
2595 DA 's-Gravenhage (NL)**

• **Chemelot Scientific Participations B.V.
6167 RD Geleen (NL)**

(72) Inventor: **The designation of the inventor has not
yet been filed**

(74) Representative: **V.O.
P.O. Box 87930
2508 DH Den Haag (NL)**

(54) **THERMOCHROMIC MATERIALS AND PREPARATION METHOD**

(57)    The disclosure pertains to the preparation of W-doped thermochromic particulate material comprising $VO_2$; the preparation method comprising three thermal treatment stages at increasing temperature.

EP 4 553 044 A1

## Description

### Field

The invention pertains to the production of thermochromic materials, in particular W-doped $VO_2$.

### Introduction

Known energy-efficient glazing solutions are static infrared blockers to reduce the solar heat gain of buildings in hot climates thereby reducing the cooling demand of the buildings. In climates with hot summers and cold winters this leads to an increase in heating demand in winter when the solar heat is still blocked and cannot be used to warm up the building. Therefore, developments focus on adaptive systems which can change the solar heat gain depending on the building's needs. In thermochromic materials the solar heat gain is self-adapted depending on the temperature. Monoclinic vanadium dioxide ($VO_2$) is such a thermochromic material for use in smart window applications due to its reversible thermochromic properties, changing solar IR transmission of coated glass panels. For application, the material can be deposited on glass either via liquid coating precursors or as particulate material within a coating matrix or polymer film. Undoped $VO_2$(M) has a transition temperature around 68°C, which is not desired in smart window applications. By doping with metals such as tungsten (W), the phase transition temperature can be lowered to values around room temperature.

US 2022/0306526A1 describes preparation methods for thermochromic materials comprising vanadium (IV) oxide and a solid component obtained from a precursor having film-forming properties.

WO 2021/242109A1 describes preparation method for thermochromic coatings comprising $VO_2$ that involve curing of the coating using two curing stages performed with different oxygen levels.

EP3936480 describes methods for the preparation of crystalline monoclinic $VO_2$ using annealing of amorphous $VO_2$ in an oxygen-containing atmosphere.

Existing methods for preparing W-doped monoclinic $VO_2$ frequently yield particles larger than 100 nm and/or comprising significant amount of amorphous $VO_2$ and/or other, undesirable, vanadium oxides. Such particles exhibit inferior thermochromic properties. Therefore, there is a desire to develop a method leading to the production of crystalline $VO_2$ particulate material with low particle size, high crystallinity and/or good thermochromic properties, with monoclinic $VO_2$ in the low-temperature state.

There remains a desire for thermochromic materials, such as particulate material, films, sheets and coatings comprising thermochromic particulate material, that when applied on or to window glass provide for energy savings for buildings, as well as the thermochromic windows themselves.

### Summary

The invention pertains in a first aspect to a method of preparing W-doped thermochromic particulate material comprising $VO_2$, the method comprising:

a) providing a precursor comprising a W dopant and a vanadium(IV) complex, wherein the vanadium(IV) complex comprises a vanadium(IV) ion and an organic complexing agent, wherein the precursor further comprises free organic complexing agent; and b) subjecting the precursor to a thermal treatment to form the W-doped thermochromic $VO_2$ particulate material, the thermal treatment comprising subsequently: a first thermal treatment stage performed in a temperature range between a temperature A selected from the sublimation temperature, the vaporisation temperature, and the decomposition temperature of the organic complexing agent, and a temperature B that is the decomposition temperature of the vanadium(IV) complex; wherein temperature B is higher than temperature A; a second thermal treatment stage performed in a temperature range from the decomposition temperature of the vanadium(IV) complex and the annealing temperature of amorphous W-doped $VO_2$ to crystalline W-doped $VO_2$, in the presence of an inert atmosphere; and a third thermal treatment stage performed in a temperature range above said annealing temperature in the presence of an inert atmosphere.

The invention also provides a W-doped $VO_2$ thermochromic particulate material obtainable by the method according to any of the preceding claims.

The invention also provides a W-doped $VO_2$ thermochromic particulate material exhibiting: an enthalpy of thermochromic switching $H_{switch}$ above 20 J/g, and/or a thermochromic switching temperature $T_{switch}$ for the switch from a monoclinic to a rutile phase between 10°C and 40°C, and/or wherein at least 90 volume % of the particles have a particle size (largest dimension) of max. 100 nm, wherein the particle size is determined by laser diffraction; preferably having said enthalpy, thermochromic switching temperature and particle size distribution in combination.

**Detailed description**

The present invention is directed to the preparation of a thermochromic W-doped $VO_2$ particulate material. Provided is a preparation method of such material that comprises thermally decomposing and annealing a precursor and that comprises three thermal treatment stages. The precursor comprises a W dopant, a vanadium(IV) complex, and, typically but not exclusively, further comprises free (or excess) organic complexing agent.

The vanadium(IV) complex comprises the organic complexing agent (ligand) and the $V^{4+}$ ion. The vanadium(IV) complex optionally further comprises $H_2O$ acting as a complexing agent (ligand) and/or the precursor comprises a hydrate of the vanadium(IV) complex. In a preferred embodiment, the vanadium(IV) complex comprises a vanadium(IV) oxalate complex and oxalic acid is used as the organic complexing agent (ligand). Generally, the organic complexing agent has a decomposition temperature and the vanadium(IV) complex also has a thermal decomposition temperature.

The thermal treatment comprises a first thermal treatment stag that is performed at one or more temperatures in a temperature range between a temperature A selected from the sublimation temperature, the vaporisation temperature, and the decomposition temperature of the organic complexing agent, and a temperature B that is the decomposition temperature of the vanadium(IV) complex. Herein, temperature B is higher than temperature A. For temperature A, the lowest is selected of the sublimation temperature, the vaporisation temperature, and the decomposition temperature, each of the free organic complexing agent (i.e. as a molecule), e.g. of the organic acid as such if an organic acid is used as the complexing agent, e.g. of oxalic acid. The complexing agent has at least one of a decomposition temperature (in particular, thermal decomposition into gaseous decomposition products), a sublimation temperature (solid to gas) and a vaporisation temperature (liquid to gas or vapor), at the operating pressure of the method.

The method comprises a second thermal treatment stage, that is subsequent to the first stage, and that comprises thermal treatment at one or more temperatures in the range between the decomposition temperature of the vanadium(IV) complex and the annealing temperature of amorphous W-doped $VO_2$ to crystalline W-doped $VO_2$, in an inert atmosphere.

The third thermal treatment stage is performed subsequent to the second thermal treatment stage and involves annealing the amorphous W-doped $VO_2$ at one or more temperature above said annealing temperature, preferably above 600°C, or above 700°C, or above 800°C, or advantageously above 900°C, in an inert atmosphere. This step yields a crystalline, thermochromic, W-doped $VO_2$ particulate material, in particular W-doped $VO_2(R)$ before cooling and W-doped $VO_2(M)$ is obtained after cooling. One or more temperatures can be used in each of the ranges of the first, second, and third stage.

The terms 'first', 'second', and 'third' permit that preceding, intermediate and subsequent stages are used. Usually, the method comprises initial heating of the material from a starting temperature (e.g. ambient), through the temperature ranges of the first and the second step, to the annealing temperature, and typically further heating to a temperature above the annealing temperature in the third step, followed by cooling. Heating rates and dwell times can be set as appropriate. Increasing temperatures are used in subsequently the first, second and third step.

The "first thermal treatment stage" can alternatively or in addition be referred to as a purification stage. The "second thermal treatment stage" can alternatively or in addition be referred to as a precursor decomposition stage. The "third thermal treatment stage" can alternatively or in addition be referred to as an annealing stage.

The invention generally pertains to the preparation of W-doped thermochromic particulate material comprising $VO_2$. The preparation method comprises three thermal treatment stages at increasing temperatures.

The term "thermochromic W-doped $VO_2$ particulate material" can alternatively or additionally be referred to as a W-doped $VO_2$ particulate material, a W-doped $VO_2(M)$ particulate material, or a crystalline W-doped $VO_2$ particulate material. The skilled person understands that thermochromic $VO_2$ is in the monoclinic phase at a temperature below the thermochromic switching temperature and is in the rutile phase at a temperature above the thermochromic switching temperature.

Without wishing to be bound by way of theory, performing the first thermal treatment stage at the specified temperature range may contribute to sublimation and/or thermal decomposition of free organic complexing agent, such as organic acid, that is used in the precursor synthesis and that could be present in the precursor. This removal of complexing agent was found to be beneficial for the second and third stage.

In the method preferably:

A) the precursor comprises up to 30 wt.%, or up to 20 wt.%, or up to 10 wt.%, or up to 5 wt.%, or up to 1 wt.%, or preferably up to 0.5 wt.% (i.e. max. 0.5 wt.%, i.e. 0-0.5 wt.%) of the free organic complexing agent, relative to total weight of the solid precursor, at the end of the first thermal treatment stage and/or at the beginning of the second thermal stage;

B) at least 70 wt.%, preferably at least 80 wt.%, or preferably at least 90 wt.%, or preferably at least 95 wt.%, or preferably at least 99 wt.%, or preferably at least 99.5 wt.% of the free organic complexing agent is removed from the precursor during the first thermal treatment stage, compared to the initial amount of the free organic complexing agent at the beginning of initial heating from ambient temperature (e.g. 25°C); and/or

C) the precursor is reduced in weight by at least 0.5 wt.%, preferably by at least 1.0 wt.%, or preferably by at least 5 wt.%, or preferably by at least 10 wt.%, or preferably by at least 20 wt.% upon thermal treatment at temperatures below the decomposition of the vanadium(IV) complex, compared to the weight at the beginning of initial heating from ambient temperature (e.g. 25°C).

Preferably, the method comprises performing the first thermal treatment stage with feature A, feature B, feature C, feature A and B, feature B and C, feature A and C, or features A, B and C. The first thermal treatment stage is preferably controlled, in particular preferably controlled to achieve one or more of said features A, B, and C. The removal and weight loss of B and C can in part be obtained by the initial heating to the first thermal treatment stage.

The present disclosure thereby (i.e. said features A, B, and C) provides a clear teaching to the skilled person to set heating rates and dwell times during the first thermal treatment stage as appropriate to obtain sufficient removal of free organic complexing agent, and, possibly removal of sufficient $H_2O$.

Without wishing to be bound by theory, it is believed that the extent of the weight loss of the precursor during the first thermal treatment stage is strongly related to the amount of the free organic complexing agent and/or the amount of solvent, e.g. free or bound water, present in said precursor. When the organic complexing agent comprises oxalic acid, the weight loss may also be related to the dehydration of vanadium(IV) oxalate n-hydrate, and the sublimation and/or vaporisation of oxalic acid. The thermal decomposition products of free organic complexing agent can exhibit reductive properties and cause formation of vanadium oxides with lower valence than $VO_2$ in the second thermal treatment stage, which is not desired. Furthermore, performing the second thermal treatment stage in an inert atmosphere can advantageously prevent the oxidation of $VO_2$ to higher valence oxides.

The inventors observed that the inventive process leads to the formation of pure $VO_2$, such as a purity of at least 98%, as was determined by XRD.

The resulting W-doped $VO_2$ particulate material exhibits, for example, a high switching enthalpy above 30 J/g and low switching temperature between 15 and 30°C.

In an embodiment, the first thermal treatment stage is performed at a temperature of at least 120°C and preferably max. 240°C, e.g. at least 170°C and/or up to 220°C, in particular for oxalic acid as the complexing agent. Generally, the first thermal treatment stage can be defined, alternatively, as thermal treatment between 120-240°C, preferably at least 170°C and/or up to 220°C.

Performing the first thermal treatment stage at a temperature below 120°C may lead to insufficient removal of free oxalic acid (or other organic complexing agent). If the temperature of the first thermal treatment stage is too high, e.g. above 240°C, free oxalic acid may start to decompose, which may lead to formation of mixed valency vanadium oxides.

Alternatively or in addition to the preferred features A, B and C mentioned above, the first thermal treatment stage is preferably performed for a duration of at least 1 minute, e.g. at least 5 minutes, or at least 30 minutes, or at least 1 hour, or at least 2 hours, or at least 5 hours, optionally less than 24 hours. A sufficient long duration of the first stage contributes to a sufficient pure material at the beginning of the second stage.

Preferably, the first thermal treatment stage is preferably conducted with an average heating rate of up to (i.e. maximum) 4.0°C/min, or up to 3.0°C/min, or up to 2.0°C/min, or up to 1.0°C/min, or up to 0.5°C/min, or up to 0.2°C/min, or up to 0.1°C/min. The average heating rate is calculated based on the total duration of the first thermal treatment stage, including any dwell times, e.g. for vanadium(IV) oxalate, the total heating from 120°C to 240°C.

In a preferred embodiment, the method comprises heating the precursor from 50°C to 240°C with an average heating rate of max. 2.0°C/min, based on the total duration of said heating, including any dwell times, or max 1.0 °C/min, or max. 0.5°C/min, or max. 0.2°C/min, or max. 0.1°C/min, preferably with vanadium(IV) oxalate as the vanadium(IV) complex.

Alternatively or in addition, the first thermal treatment stage is preferably performed for at least a part of the duration with a gas flow with a gas hourly space velocity of at least 12 $h^{-1}$, or at least 20 $h^{-1}$, or at least 30 $h^{-1}$, or at least 50 $h^{-1}$, or at least 72 $h^{-1}$, and optionally up to 200 $h^{-1}$. Preferably, the first thermal treatment stage is carried out in a reactor with a gas inlet and gas outlet; and the gas flow allows for withdrawal of the gas with any decomposition products in it. The first thermal treatment stage may comprise multiple parts with different gas flow rates.

The gas flow rate can be combined with the heating rate and/or duration of the first stage, and preferably result in a process having said features A, B and/or C.

The first thermal treatment stage optionally uses a single gas phase (atmosphere, preferably gas flow) or two or more gas phases (atmospheres, preferably gas flows) with different composition. For instance, the gas phase is an inert atmosphere during the entire first stage or part thereof, or an oxygen-containing atmosphere during the entire first stage or part thereof, or a combination thereof. Inert, as used herein, refers to substantially oxygen free (e.g. less than 0.1 vol.% $O_2$); and an oxygen-containing atmosphere comprises at least 1.0 vol.% $O_2$ or at least 10 vol.% $O_2$. Preferably, the inert atmosphere comprises one or more inert gas, e.g. nitrogen and/or argon, e.g. for at least at least 99.5 vol.% in total.

Optionally, the first thermal treatment stage comprises change in the composition of the gas phase used in that stage.

Preferably, the gas phase is an inert atmosphere, and an oxygen containing atmosphere for a part of the first thermal treatment stage. Preferably, the method comprises performing a first part of the first thermal treatment stage under an inert atmosphere and a subsequent second part of the first thermal treatment stage under an oxygen containing atmosphere, e.g. with at least 10°C or at least 20 vol.% $O_2$. The ratio of the duration of the first and second part is e.g. in the range 4:1 to 1:4, or e.g. in the range 2:1 to 1:2, end the first part is e.g. 30 - 70 % of the total first stage. This embodiment advantageously provides for the good removal of the free organic complexing agent without substantial reduction and/or oxidation of the precursor.

The precursor is preferably provided as a solid material comprising the vanadium complex for the first stage, optionally in combination with some liquid. The solid material is preferably a granular material, e.g. a powder, in particular at the beginning of the first thermal treatment stage.

Generally, the second thermal treatment stage is performed in a temperature range from the decomposition temperature of the vanadium(IV) complex to the annealing temperature of $VO_2$, i.e. the temperature of annealing amorphous W-doped $VO_2$ to crystalline W-doped $VO_2$. The annealing temperature is higher than the decomposition temperature of the complex.

In an embodiment, the temperature range of the second thermal treatment stage is at least 240°C and/or up to 400°C, e.g. 250-350°C, in particular with vanadium(IV) oxalate as the complex. It is observed that if the temperature of the second thermal treatment stage is too low, e.g. below 240°C, the vanadium(IV) complex would not decompose to vanadium(IV) oxide. A temperature above 400°C may lead to rapid decomposition of the precursor and release of possibly reductive decomposition by-products, which in turn may lead to the formation of the W-doped vanadium oxide product with mixed valency.

Preferably, the second thermal stage is performed until a) until the amorphous W-doped $VO_2$ comprises less than 20 wt.% of the precursor, preferably up to 10 wt.%, preferably up to 5 wt.%, preferably up to 1 wt.%, or preferably up to 0.5 wt.%, or preferably up to 0.1 wt.%, of the precursor, and/or b) the precursor is reduced in weight by at least 10 wt.%, preferably by at least 20 wt.%, or preferably by at least 30 wt.%, or preferably by at least 50 wt.%.

Preferably, the second thermal treatment stage is performed for a duration of at least 1 minute, e.g. at least 5 minutes, or at least 30 minutes, or at least 1 hour, or at least 2 hours, or at least 5 hours, or at least 10 hours, optionally less than 48 hours.

Preferably, the atmosphere (gas flow) used in the second stage comprises maximum 0.2 vol. % $O_2$, or up to 0.1 vol. % $O_2$, or up to 0.05 vol. % $O_2$ and/or least 99.8 vol. % of an inert gas, e.g. nitrogen and/or argon.

An inert gas, as used herein, is a gas other than $O_2$. An inert atmosphere, as used herein for the second and third stage, and optionally for a part or all of the first stage, comprises typically less than 10 vol.% $O_2$, e.g. max. 1.0 vol.% $O_2$, or max. 0.2 vol. % $O_2$.

For example, the second thermal treatment stage is carried out with a gas flow with a gas hourly space velocity of at least 12 h$^{-1}$, e.g. in the range between 48 and/or up to 200 h$^{-1}$. This flow rate provides the advantage that the reductive by-products resulting from the decomposition of the complex, can be removed fast, which may in turn may prevent the formation of W-doped vanadium oxide product with mixed valency.

Generally, the third thermal treatment stage performed at one or more temperatures in a temperature range above the annealing temperature and in the presence of an inert atmosphere

In an embodiment, the temperature range of the third thermal treatment stage at least 600°C, e.g. 600-1500°C. A temperature below 600°C may lead to a low crystallinity of the obtained W-doped $VO_2$ material, and a too high temperature may cause the W-doped $VO_2$ particulate material to be formed as a phase of $VO_2$ other rutile. Preferably, the third thermal treatment stage is performed at a temperature above 900°C, e.g. 1000-1200°C. The inventors observed that performing the third thermal stage at a temperature above 900°C leads to an improved W dopant distribution within the individual $VO_2$ crystals in the W-doped $VO_2$ particulate material.

Preferably, the third thermal stage is performed until the crystalline W-doped $VO_2$ comprises max. 20 wt.% amorphous W-doped $VO_2$, preferably up to 10 wt.%, preferably up to 5 wt.%, preferably up to 1 wt.%, or preferably up to 0.5 wt.%, or preferably up to 0.1 wt.%, of the amorphous W-doped $VO_2$.

Preferably, the third thermal treatment stage is performed for a duration of at least 1 minute, e.g. at least 5 minutes, or at least 30 minutes, or at least 1 hour, or at least 2 hours, or at least 5 hours, or at least 24 hours, or at least 48 hours, optionally less than 72 hours.

Preferably, the atmosphere of the third stage comprises maximum 0.2 vol. % $O_2$, or up to 0.1 vol. % $O_2$, or up to 0.05 vol. % $O_2$ and/or least 99.8 vol. % of an inert gas, e.g. nitrogen and/or argon.

In an embodiment wherein the vanadium(IV) complex comprises vanadium (IV) oxalate, preferably the first thermal treatment stage is performed in the range between 120°C and 240°C, more preferably at least 150°C and/or up to 220°C; the second thermal treatment stage is performed in the temperature range between 250°C and 350°C, and the third thermal treatment stage performed in the temperature range of at least 400°C, or above 500°C, or above 600°C, or above 700°C, or above 800°C, or above 900°C, or above 1000°C, or above 1100°C, or above 1200°C, typically below 1500°C;

one or more temperatures can be used in each range. This embodiment illustrates an exemplary temperature profile suitable for the method performed using vanadium(IV) oxalate as the vanadium(IV) complex. Especially in this embodiment, the first thermal stage is highly preferably carried out with an average heating rate of max. 2.0 °C/min in said range 150°C to 220°C, preferably, preferably with an average heating rate of max. 2.0 °C/min in the range 120°C to 240°C; more preferably with a heating rate of max. 1.0°C/min, or max. 0.5°C/min, or max. 0.2°C/min, or even max. 0.1°C/min in said ranges. Slow heating and/or relatively long dwell times in said temperature ranges was found to be advantageous for the properties of the thermochromic material.

As mentioned, is the precursor preferably provided as a solid granular material, e.g. a powder, at the beginning of the first thermal treatment stage; and the material that is treated during the second and third stage is preferably also a solid granular material, e.g. a powder.

In a preferred embodiment, the solid granular material is kept in motion during at least a part of the first and/or second thermal treatment stage. For example, the first and second stage are performed, each independently, in a rotating furnace, for instance in the same furnace or in different furnaces. Optionally, the solid granular material also kept in motion during the third thermal treatment stage.

Preferably, the solid material, e.g. the powder, is kept in motion during at least a part, e.g. at least 90% of the duration, or the entire duration, of the first, and/or second thermal treatment stage, e.g. by oscillatory motion or by rotation motion. This was found to give a better product than with a static oven due to improved heat distribution within the material, and reduced risk material reduction due to entrapment of the gaseous precursor decomposition products with reductive properties within the solid material.

For instance, one or more rotating furnace can be used. Advantageously, the rotating furnace allows for processing of the higher amount of the material compared to static oven because there is no need to apply the material as a thin layer to yield a product with acceptable quality; this applies also to other ovens wherein the solid precursor is kept in motion. The furnace is operated for instance with at least 5 rpm, or at least 10 rpm.

In an embodiment, the rotating furnace is a batch furnace. In another embodiment, the rotating furnace is continuous furnace; e.g. with different zones for each thermal treatment step. In another embodiment, a conveyor belt furnace can be used the first thermal treatment stage, the second thermal treatment stage and/or the third thermal treatment stage. The selection of the appropriate furnace suitable for a batch or a continuous process is not particularly limited.

Preferably, the method comprises performing at least the first thermal treatment stage in suitable furnace configured for motion of the solid precursor, loading an appropriate vessel at a static state, so as to form a layer of the precursor with a thickness of at least 1 mm, or at least 5 mm, and performing the first thermal treatment stage while providing for motion of the solid precursor.

The precursor, at the beginning of the first thermal treatment stage, is a material, preferably a solid material, comprising the W dopant, the vanadium(IV) complex, wherein the vanadium(IV) complex comprises a vanadium (IV) ion and an organic complexing agent.

The precursor further typically comprises free organic complexing agent, i.e. unreacted organic complexing agent, e.g. oxalic acid. The precursor preferably comprises at least 0.001 wt.%, or at least 0.01 wt.%, or at least 0.1 wt.%, or at least 1.0 wt.%, or at least 5 wt.% of the free organic complexing agent.

The vanadium(IV) complex can be any suitable complex of vanadium(IV) which can be thermally decomposed to $VO_2$. Preferably, the vanadium(IV) complex comprises vanadium(IV) oxalate. Advantageously, the vanadium(IV) oxalate decomposition profile in the second thermal treatment stage is highly desirable. In particular, its decomposition leads to the formation of gaseous decomposition products and substantially no residual carbon formation. Furthermore, the decomposition temperature of vanadium(IV) oxalate is advantageously low which decreases the risk of oxidation of $V^{4+}$ into $V^{5+}$.

In an embodiment, the precursor further comprises a solvent, e.g. water. The precursor is alternatively or in addition a hydrate of vanadium(IV) complex, e.g. vanadium(IV) oxalate n-hydrate. During the first thermal treatment stage the bound water present in the hydrate of the vanadium(IV) complex, e.g. vanadium(IV) oxalate n-hydrate, could be removed from the precursor and at least part, preferably all, vanadium(IV) complex could be in the anhydrous form, e.g. anhydrous vanadium(IV) oxalate, after the first thermal treatment stage.

Alternatively or in addition, the precursor comprises two or more complexing agents, e.g. water and oxalic acid, in an embodiment a mixed vanadium(IV) complex.

Preferably, the precursor is in a solid state, more preferably the precursor is granular material, e.g. a granulate or a powder. A granular material consists of discrete solid particles. The term "granulate" in an embodiment refers to solid, macroscopic particles having at least one dimension, preferably all dimensions, of e.g. up to 10 mm, or up to 5 mm, or up to 1 mm, or up to 0.5 mm, preferably at least 0.4 mm. The term "powder" in an embodiment refers to solid, macroscopic particles having at least one dimension, preferably all dimensions, of e.g. up to 0.4 mm, or up to 0.1 mm, or up to 0.01 mm, or up to 0.001 mm.

In an embodiment, the method comprises preparing the precursor comprising the W dopant and the vanadium(IV) complex; wherein the precursor is preferably a solid material. The step of preparing the precursor preferably involves a sol-gel method.

For example, the method comprises providing a liquid composition (e.g. a sol) comprising a liquid component, the W dopant, preferably free organic complexing agent, and the vanadium(IV) complex, and removing liquid from said liquid composition to obtain, after appropriate drying, e.g. through gel, a solid precursor material; with the liquid removed e.g. by evaporation. The liquid composition is e.g. a solution or dispersion of the complex. The liquid is e.g. a solvent or a liquid dispersion medium.

In an embodiment, the W dopant, e.g. a tungsten salt solution, is combined with a vanadium salt solution, e.g. a solution of a vanadium(V) salt, e.g. vanadium pentoxide, or a vanadium(IV) salt. In an example embodiment, the organic complexing agent, e.g. organic acid, is added to a solution of vanadium pentoxide and a tungsten salt. It was found to be advantageous to introduce the W ions before the vanadium complex is formed, for good doping effect in the crystalline $VO_2$.

The precursor is e.g. prepared by mixing the W dopant with a liquid phase comprising the complex, e.g. by mixing with a solution of the vanadium(IV) complex. The vanadium(IV) complex is preferably prepared in a reaction between vanadium(V) pentoxide and the organic complexing agent, preferably at elevated temperature, e.g. above 70°C, in the presence of a solvent or liquid carrier. Preferably, the organic complexing agent comprises oxalic acid.

Preferably, an excess of at least 10 mol% and/or up to 70 mol% of the organic complexing agent, e.g. oxalic acid, relative to the stoichiometric amount, is used to accelerate the reaction and ensure full conversion of vanadium(V) pentoxide to vanadium(IV) complex, e.g. vanadium(IV) oxalate.

The reaction between vanadium(V) pentoxide and the organic complexing agent is preferably performed in a solvent, or liquid medium, e.g. an aqueous liquid medium or aqueous-alcoholic liquid medium, e.g. water-methanol or water-2-propanol. More preferably, the reaction is performed in the aqueous-alcoholic medium. Preferably, the alcohol is selected from the group consisting of methanol, ethanol, propanol, butanol, pentanol, hexanol, isomers thereof, and combinations thereof. Without wishing to be bound by theory, it is believed that addition of alcohol improves dispersion quality of the reaction mixture.

In an embodiment, the method comprises forming a sol comprising the W dopant and the vanadium(IV) complex in an appropriate liquid, such as water and/or alcohol. Preferably, the alcohol is selected from the group consisting of methanol, ethanol, propanol, butanol, pentanol, hexanol, all isomers thereof, and combinations thereof.

Preferably, the method further comprises converting the sol comprising the W dopant and the vanadium(IV) complex into a gel upon removal of at least part of the liquid/solvent, e.g. at least 90 wt.% of the liquid/solvent, e.g. by evaporation, to give the solid precursor comprising the W dopant and the vanadium(IV) complex, optionally with intermediate treatments such as size reduction and sieving to obtain a powder.

In an embodiment, the process comprises combining a solution the W dopant (e.g. a solution of a tungsten salt) and a liquid phase comprising vanadium ions or vanadium complex, e.g. a solution of a vanadium salt or a solution of the vanadium(IV) complex, and removal of the solvent, e.g. by evaporation, to form a solid material. This embodiment can be advantageous for the integration of the W dopant in amorphous $VO_2$, which in turn allows for at least partial incorporation of the W dopant into the crystalline structure of the $VO_2$ after the annealing. This may contribute to a desirable low thermochromic switching temperature.

The precursor comprises the W dopant. The W dopant advantageously decreases the thermochromic switching temperature, e.g. to 15-30°C, as can be determined by Differential Scanning Calorimetry (DSC). Preferably between 1.0 atm. % and 3 atm. % of W dopant is used. More preferably, at least 1.5 atm.% and/or less than 2.5 atm.% of W dopant is used. The amount of W dopant is given relative to vanadium (V) atoms present in the $VO_2$ particulate material.

Preferably, the W dopant is added to the vanadium(IV) complex. For example, a solution of a tungsten salt is added to a solution or a suspension of the vanadium(IV) complex, mixed and the solvent is evaporated to give the precursor, preferably in a solid state.

Preferably, the W-doped $VO_2$ particulate material exhibits a switching enthalpy for the first order phase transition of $VO_2$ (M) to $VO_2$ (R), that is at least 50% or at least 60% or at least 80% of the theoretical switching enthalpy for said transition of $VO_2$ (M) to $VO_2$ (R) of W-doped $VO_2$, as measured with Differential Scanning Calorimetry (DSC).

The theoretical maximum enthalpy for fully crystalline W-doped thermochromic $VO_2$ (M) particles is defined as a function of thermochromic switch temperature, which follows the formula $H_{switch,theoretical} = a*x + b$, where: $a = 0.45$ kJ*kg$^{-1}$*°C$^{-1}$, x is $T_{switch}$ in °C, and b = 20.28 kJ*kg$^{-1}$ (standard enthalpy of $VO_2$ particulate at $T_{switch}$ = 0°C).

In a preferred embodiment, the method further comprises, after the third thermal treatment and suitably cooling, size reduction of the W-doped $VO_2$ particulate material, e.g. with bead milling. The size reduction leads to the production of a size reduced W-doped $VO_2$ particulate material. Preferably, the size reduced particulate material has a particle size of max. 200 nm, or max. 100 nm, or max. 50 nm, as determined e.g. by laser diffraction. Preferably, the size reduced particulate material comprises at least 90%, or at least 95% of particles having a largest dimension of max. 200 nm, or max. 100 nm, or max.75 nm, or max. 50 nm, as determined e.g., by laser diffraction, percentage on volume basis.

The size reduced W-doped $VO_2$ particulate material, can be used as pigment, in particular for smart window applications. The size reduced particulate material, e.g. with particle size of max. 100 nm, advantageously allows for obtaining optically transparent thermochromic films, sheets and/or coatings that comprise the size reduced particulate material; and may have reduced haze.

The present disclosure provides in embodiments W-doped $VO_2$ particulate material with an enthalpy of thermochromic switching $H_{switch}$ above 20 J/g and a phase transition temperature $T_{switch}$ between 10°C and 40°C, for instance between 20°C and 30°C, wherein preferably at least 90 volume % of the particles have a particle size, (i.e. largest dimension) of max. 100 nm. Preferably, the particle size is determined by laser diffraction, enthalpy with DSC, and thermochromic switching with DSC or with optical measurements.

Preferably, at least 90 volume % of the particles have a particle size (largest dimension) of max. 100 nm, as determined by laser diffraction.

Such W-doped $VO_2$ particulate advantageously exhibits promising thermochromic performance and can advantageously be used for energy-saving window glazing; and can be obtained e.g. after a size-reduction step. As shown in Example 2, which example does not limit the invention, a thermochromic coating with excellent optical properties, such as visible light transmittance above 60% and solar modulation above 10%, can be obtained using the inventive $VO_2$ particulate material.

Preferably, the produced W-doped $VO_2$ particulate material with reduced particle size exhibits an enthalpy of thermochromic switching $H_{switch}$ for the first order phase transition of $VO_2$ (M) to $VO_2$ (R), that is at least 50% or at least 60% or at least 70% of the theoretical enthalpy of thermochromic switching $H_{switch}$ for said transition of $VO_2$ (M) to $VO_2$ (R), as measured with Differential Scanning Calorimetry (DSC). The theoretical maximum enthalpy for fully crystalline W-doped thermochromic $VO_2$ (M) particles is defined as a function of thermochromic switch temperature, which follows the formula $H_{switch,theoretical}=a*x+b$, where: a = 0.45 kJ*kg$^{-1}$*°C$^{-1}$, x is $T_{switch}$ in °C, and b = 20.28 kJ*kg$^{-1}$ (standard enthalpy of $VO_2$ particulate at $T_{switch}$ = 0°C).

Also provided by the invention is the W-doped $VO_2$ particulate material obtainable by the inventive method. This particulate material preferably has the preferred properties mentioned above (enthalpy of thermochromic switching, particle size, and/or switching temperature).

In an aspect, the present disclosure also provides a coating formulation comprising the inventive W-doped $VO_2$ particulate material, preferably with reduced particle size. The coating formulation is a liquid and can be applied on a substrate and hardened or cured to obtain a coated article having a thermochromic coating.

The coating formulation comprises the W-doped $VO_2$ thermochromic particulate material and at least one liquid coating component. The liquid coating component is e.g. a binder, such as a Si-based binder, for instance an alkoxysilane, or an organic binder, such as an acrylic resin or a polyurethane resin.

The invention also provides, in various aspects, an article comprising the W-doped $VO_2$ thermochromic particulate material of the invention or as obtained with or obtainable by the inventive preparation method. The article is, for instance:

- a polymer film or a polymer sheet comprising the W-doped $VO_2$ thermochromic particulate material, and a polymeric material, e.g. with the thermochromic particulate material embedded in a polymeric material;
- a coated polymer film or sheet comprising, as substrate, a polymer film or sheet, and a coating comprising the W-doped $VO_2$ thermochromic particulate material on the substrate;
- a glass pane, or other kind of article, comprising a substrate, preferably an optically (380 -700 nm) transparent substrate, e.g. a glass substrate (which may include acrylic glass and other types of polymer glass), and layer comprising the W-doped $VO_2$ thermochromic particulate material, wherein said layer is a thermochromic layer and is applied directly or indirectly onto the substrate, e.g. with intermediate layers between the thermochromic layer and the substrate. The thermochromic layer is for instance, a polymer film or a polymer sheet comprising the W-doped $VO_2$ thermochromic particulate material, and a polymeric material, e.g. with the thermochromic particulate material embedded in a polymeric material. In a further embodiment, the thermochromic layer is for instance, a coating applied directly to the substrate, or a coating applied to an intermediate layer, wherein the intermediate layer is applied to the substrate, and the intermediate layer is e.g. a polymer film or polymer sheet.

The polymer film, polymer sheet, and glass pane can each be used for windows, e.g. for buildings or vehicles.

The invention also pertains to a method of making such article, comprising preparing the W-doped $VO_2$ thermochromic particulate material using the inventive preparation method, preferably with the size reduction step, and incorporating the prepared W-doped $VO_2$ thermochromic particulate material into the article.

Preferably, the article exhibits a high visible light transmission, e.g. at least 60%, and a high solar modulation, e.g. at least 10%, e.g. as determined according to NEN-EN 410:2011 standard; and/or preferably exhibit, each independently, a $SSF_{coating}$ of at least 600, preferably wherein $SSF_{coating}$ is at least 700, or at least 800, or at least 900; with $SSF_{coating}$ as defined in the examples.

The polymeric material of the polymer sheet or film comprises, for example, a polymer selected from the group consisting of polyvinyl butyral (PVB), poly (ethylene-vinyl acetate) (EVA), polyolefin elastomers (POE), polycarbonate (PC), polyethylene terephthalate (PET), and combinations thereof. The $VO_2$ particulate material is embedded in the polymeric matrix. The polymer film or sheet may optionally comprise additives.

The polymer film or sheet is for instance a single layer film or a multilayer film. The polymer film or sheet comprises e.g. a layer comprising the W-doped $VO_2$ particulate material and the polymeric matrix and optionally comprises additional layers; these layers are e.g. laminated. The additional layers e.g. include a polymer layer. The polymer film or sheet comprising the W-doped $VO_2$ particulate material is e.g. adhesive or self-adhesive. The preparation of the polymer film or sheet is not particularly limited. Non-limiting examples thereof include solvent casting, extrusion, compression moulding and injection moulding. The polymer film or sheet is e.g. laminated with other polymer layers to produce a laminated film or sheet comprising the W-doped $VO_2$ particulate material. The invention also pertains to such a method of preparing a polymer film or sheet using the W-doped $VO_2$ particulate material.

The article is e.g. used for making windows. The window is, for instance, a single-pane glazing, or a multiple-pane glazing (viz. an insulating glass unit), such as e.g. a double-pane glazing or a triple-pane glazing. The window is for example an insulating glass unit (IGU) that comprises a first pane coated with a low-e coating and a second pane coated with the thermochromic coating or laminated with polymer film or sheet comprising the thermochromic material.

The invention also pertains to the use of the W-doped $VO_2$ particulate material of the invention and/or as obtained with the inventive method as a component in a thermochromic film, in a thermochromic coating, in a thermochromic glazing and/or in a thermochromic window.

For the purpose of clarity and a concise description features are described herein as part of the same or separate embodiments, however, it will be appreciated that the scope of the invention may include embodiments having combinations of all or some of the features described.

The terms "first", "second", and "third" are non-limiting terms which do not exclude, for method steps or stages, any steps or stages performed before, between, and after said stage. The method merely specifies that these three stages are required, in the recited order, but is not limited to them. Accordingly, the term "three-step" is non-limiting in the same manner.

The method is, for example, performed substantially atmospheric pressure, e.g. 0.8 to 1.2 (bar absolute).

All gas flows are given as a gas hourly space velocity expressed in $h^{-1}$.

The abbreviation "max." indicates "maximum", i.e. "equal to or less than".

## Examples

The invention will now be further illustrated by the following non-limiting examples. These examples do not limit the invention and do not limit the claims.

Example 1

*Materials*

Vanadium(V) pentoxide ($V_2O_5$), oxalic acid, tungsten hexachloride, 2-propanol were purchased; zirconium oxide beads, yttrium stabilized, diameter 2.00 mm were purchased. Milli-Q water was purified using a Q-POD-Merck™ system.

*Example preparation of W-doped $VO_2$ particulate material*

Oxalic acid was suspended in Milli-Q water in a reactor pre-heated to 80°C, equipped with a cooler, an overhead stirrer and a funnel. The resulting white slurry mixture was stirred for 15 minutes. Subsequently, $V_2O_5$ was added to the mixture. During the addition of the $V_2O_5$, 2-propanol and Milli-Q water was added to ensure complete dissolution of all reagents in the reaction mixture. Afterwards, the solution was stirred for 1 hour at 80°C. Then, the reaction mixture comprising vanadium(IV) oxalate complex and unreacted oxalic acid was cooled to an ambient temperature and the mixture was diluted with 2-propanol.

A tungsten solution was prepared by dissolving tungsten hexachloride in 2-propanol to an appropriate concentration. An appropriate amount of the tungsten solution was added to an appropriate amount of the vanadium(IV) oxalate and oxalic acid solution as described herein-above and stirred for 16 hours to yield 2.0 atm.% of W. The amount (atm.%) of dopant (W) is calculated on the basis of metal atoms (total V and W atoms). The solvent was then removed using a rotary evaporator and W-doped vanadium(IV) oxalate precursor material was dried in a vacuum oven.

Then, the material was powdered using a mill equipped with a sieve with mesh size of 2 mm. The resulting W-doped vanadium(IV) oxalate powder was then converted into amorphous W-doped $VO_2$ material and annealed in a semi-rotary tube furnace equipped with a quartz tube.

Firstly, the powder was heated with a heating rate of 2.5°C/min to 190°C and kept isothermal for 2 hours under 5.0 L/min $N_2$ at 190°C, then the powder was kept isothermal for 1.5 hour at 190°C under 5 L/min compressed air during the first thermal treatment stage. The second thermal treatment step was carried out in a nitrogen flow of 5.0 L/min. The powder was heated to 275°C with a heating rate of 10°C/min and kept isothermal at 275°C for 7 hours. Subsequently, the powder was heated with a heating rate of 10°C/min to 1000°C and kept isothermal for 1 hour at 1000°C under a nitrogen flow of 4.0 L/min in the third thermal treatment stage. The W-doped $VO_2$ particulate material was removed from the tube furnace and used as such respectively size reduced.

*Example preparation of size reduced W-doped $VO_2$ particulate material*

Sieved monoclinic W-doped $VO_2$ particulate material (using a 560 pm mean pore size sieve), obtained as described herein-above, was added to a borosilicate container filled with zirconium oxide beads (50% of chamber volume) and degassed Milli-Q water. The resulting mixture containing 20% of W-doped $VO_2$ particulate material was placed on a roller bank running at 80 rpm. Afterwards, the size reduced W-doped particulate material was dried in vacuum.

*Characterization*

The switching temperature and the switching enthalpy were measured with Differential Scanning Calorimetry (DSC) using the DSC Discovery Classic system from TA Instruments®. The sample was measured in a hermetic aluminium pan under $N_2$ atmosphere, with a heating and cooling rate of 20°C/min. The switching temperature and the switching enthalpy were determined from the heating cycle.

In order to determine the particulate size distribution, laser diffraction measurements were carried out using the Mastersizer 3000 from Malvern Panalytical. D90 indicates that 90 % of the particles in the sample have a largest dimension up to the D90 value determined based on volume weighted particle size distribution.

*Switching enthalpy*

The switching enthalpy ($\Delta H$) was measured using Differential Scanning Calorimetry (DSC), which was carried out on a Discovery DSC (TA Instruments). The W-doped $VO_2$ powder samples (20 mg) were placed in pans (TA instruments, $T_{zero}$ aluminium hermetic pan with inverted lid). All samples were subjected to a heating rate of 20°C/min. The switching enthalpy is calculated from the DSC measurement using the TA instruments TRIOS software v5.0.

*Switching Temperature ($T_{switch}$) (particulates)*

The switching temperature of the thermochromic particulates was defined as the temperature at minimum and maximum heat flow in the DSC curve upon heating $T_{switch,H}$ and upon cooling $T_{switch,C}$, respectively.

*Results*

**Table 1** shows the summary of the corresponding DSC results of the above-mentioned W-doped $VO_2$ samples with the particulate size distribution as determined by laser diffraction analysis.

Table 1

|  | W-doped $VO_2$ particulate material | Size reduced W-doped $VO_2$ particulate material |
|---|---|---|
| **Particle size D90 [nm]** | 24000 | 63.3 |
| **Switching enthalpy [J/g]** | 33.7 | 23.1 |
| **Switching temperature [°C]** | 19.74 | 25.44 |

A decrease in the switching enthalpy is observed after size reduction, possibly due to a partial loss of crystallinity. Advantageously, the size reduced W-doped $VO_2$ particulate material exhibits the particularly optimal switching temperature to be used as or as a part of the pigment composition for the thermochromic glazing. Certain increase in the switching temperature is observed. Without wishing to be bound by theory, the inventors believe that said increase in the switching temperature can be caused by defects in the structure of the size reduced W-doped $VO_2$ particulate material and/or less uniform distribution of W dopant within the size reduced W-doped $VO_2$ particulate material. Furthermore, the size reduced W-doped $VO_2$ particulate material has an advantageous particle size D90 up to 100 nm which yields reduced haze of the glazing coating with improved overall properties of the thermochromic particulate compared to W-doped $VO_2$ particulate material with a size above 100 nm.

Example 2

*Materials*

Pilkington Optiwhite™ glass is used as a substrate, polymer matrix additives, solvent were purchased.

*Pre-treatment of glass substrate*

Pilkington Optiwhite™ glass of 4 mm was cut to a size of 10.0 x 10.0 cm. The resulting plates were placed into a ultrasonic bath filled with a cleaning solution. The cleaning solution was prepared by the addition of $NH_4OH$ 30 wt.% in water, followed by addition of hydrogen peroxide 50 wt.% in water to demineralized water, stirred for 15 minutes. The bath was heated to 60°C. The material was ultrasonicated for 4 hours and left in the bath for another 20 hours. The glass was then removed from the bath, rinsed with demineralized water, and left to dry at ambient conditions. Glass substrates which did not displayed a homogeneous wetting of water with a contact angle lower the 10° where rejected.

*Example preparation of a coating comprising size reduced W-doped $VO_2$ particulate material*

POT formulation:

Tetraethyl orthosilicate (TEOS) was heated in an oil bath to 60°C. Then glacial acetic acid, 2-propanol and milli-Q water was added. The solution was mixed for 50 minutes at 60°C. After that the solution was cooled down to room temperature and diluted with 2-propanol.

Preparation of $VO_2$/$SiO_2$ coating formulation:

The size reduced W-doped $VO_2$ particulate material, prepared according to Example 1, was dispersed in 2-propanol to form a 15 wt.% dispersion, and the dispersion was agitated with the use of an ultrasonic tip 5 min. To this dispersion a wetting and dispersing additive was added, and the resulting dispersion was then agitated with the use of an ultrasonic tip for 5 minutes, and stirred on a roller bank for 4 days. Then, the dispersion was agitated using the ultrasonic tip for 5 min before adding it to the POT formulation. This formulation was coated on a glass substrate using dip coating and cured for 30 minutes at 150°C in a convection oven.

*Characterization*

Layer thickness

To determine the coating layer thickness the following method has been chosen: during the application method on a position on the substrate a piece of substrate was masked using Scotch® Magic™ tape from 3M, before annealing the coating this piece was removed leaving behind an uncoated part on the substrate. This was needed to measure the height difference between coating and substrate. Using a Bruker Dektak® XT benchtop stylus profilometer, the height difference between coated and uncoated surface is then determined. The following settings were used: measurement range 6.5 $\mu$m; scan length 2000 $\mu$m; duration 20 seconds; stylus type 2 $\mu$m; stylus force 5 mg.

Visible light transmission and solar modulation values

*Tvis* and *ΔTsol* were determined according to NEN-EN 410 standard using the formulas described in CIE No. 15, Colorimetry, technical report 3rd ed. (2004) and CIE No. 85, Solar spectral irradiance, technical report (1989).
The visible light transmittance *Tvis* or $\tau_v$ of the glazing was calculated using the following formula:

$$\tau_v = \frac{\sum_{\lambda=380\,nm}^{780\,nm} D_\lambda \tau(\lambda) V(\lambda) \Delta\lambda}{\sum_{\lambda=380\,nm}^{780\,nm} D_\lambda V(\lambda) \Delta\lambda}$$

wherein: $D_\lambda$ is the relative spectral distribution of illuminant D65; $t(\lambda)$ is the spectral transmittance of the glazing; $V(\lambda)$ is the spectral luminous efficiency for photopic vision defining the standard observer for photometry; $\Delta\lambda$ is the wavelength interval.

The solar modulation $\Delta Tsol$ was calculated using following formula:

$$\Delta Tsol = \tau_e\ (cold) - \tau_e\ (hot)$$

wherein: $\tau_e$ *(cold)* is the solar direct transmission of the glazing in the cold state; $\tau_e$ *(hot)* is the solar direct transmission of the glazing in the hot state.

The solar direct transmittance $\tau_e$ of the glazing was calculated using the following formula:

$$\tau_e = \frac{\sum_{\lambda=300\,nm}^{2500\,nm} S_\lambda \tau(\lambda)\Delta\lambda}{\sum_{\lambda=300\,nm}^{2500\,nm} S_\lambda \Delta\lambda}$$

wherein: $S_\lambda$ is the relative spectral distribution of the solar radiation; $\tau(\lambda)$ is the spectral transmittance of the glazing; $\Delta\lambda$ is the wavelength interval.

$SSF_{coating}$ (the SunSmart Factor of the coating) can be calculated by multiplication of the numeric percentage values of Tvis and $\Delta$Tsol, $SSF_{coating}$ = Tvis * $\Delta$Tsol. Good results are obtained when $SSF_{coating}$ is at least 600, preferably wherein $SSF_{coating}$ is at least 700.

The optical characteristics of the coatings were analysed using a Perkin Elmer UV/VIS/NIR Spectrometer Lambda 750 with UL150t equipped with an upward looking 150 mm integrating sphere accessory with a temperature controlled sample holder. The substrates were heated and cooled at a rate of 1°C/min at 2°C intervals in a temperature range between -10°C and 120°C. The subsequent transmission and reflection were measured in the range of 250-2400 nm with 10 nm intervals. The temperature measurement was determined by placing a thermocouple at the coated side, which was facing the integrating sphere.

*Results*

**Table 2** shows the summary of the visible light transmission and solar modulation values of the coating obtained in Example 2. Advantageously, the coating exhibits very high *Tvis* above 60 %, $\Delta Tsol$ above 15%, and resulting $SSF_{coating}$ above 900 which indicates excellent optical properties of this $VO_2$-based thermochromic coating.

Table 2

| | |
|---|---|
| Layer thickness [nm] | 473 |
| $T_{vis}$ [%] | 60 |
| $\Delta T_{sol}$ [%] | 15.2 |
| $SSF_{coating}$ [-] | 912 |

**Claims**

1. A method of preparing W-doped thermochromic particulate material comprising $VO_2$, the method comprising:

a) providing a precursor comprising a W dopant and a vanadium(IV) complex, wherein the vanadium(IV) complex comprises a vanadium(IV) ion and an organic complexing agent, wherein the precursor further comprises free organic complexing agent; and
b) subjecting the precursor to a thermal treatment to form the W-doped thermochromic $VO_2$ particulate material, the thermal treatment comprising subsequently:

- a first thermal treatment stage performed in a temperature range between a temperature A selected from the sublimation temperature, the vaporisation temperature, and the decomposition temperature of the organic complexing agent, and a temperature B that is the decomposition temperature of the vanadium(IV) complex;

wherein temperature B is higher than temperature A;
- a second thermal treatment stage performed in a temperature range from the decomposition temperature of the vanadium(IV) complex and the annealing temperature of amorphous W-doped $VO_2$ to crystalline W-doped $VO_2$, in the presence of an inert atmosphere; and
- a third thermal treatment stage performed in a temperature range above said annealing temperature in the presence of an inert atmosphere.

2. The method according claim 1, wherein the organic complexing agent

comprises oxalic acid, wherein the first thermal treatment stage is performed at a temperature between 150°C and 240°C,
wherein the second thermal treatment stage is performed at a temperature between 250°C and 350°C, and
wherein the third thermal treatment stage is performed at a temperature of at least 900°C.

3. The method according to claim 1 or 2, wherein

A) the precursor comprises max. 1 wt.% of the free organic complexing agent at the end of the first thermal treatment stage and/or at the beginning of the second thermal stage; and preferably
B) at least 95 wt.%, or preferably at least 99 wt.%, or preferably at least 99.5 wt.% of the free organic complexing agent is removed from the precursor during the first thermal treatment stage, compared to the initial amount of the free organic complexing agent at the beginning of initial heating from ambient temperature; and preferably
C) the precursor is reduced in weight by at least 5 wt.%, upon thermal treatment at temperatures below the decomposition of the vanadium(IV) complex, compared to the weight at the beginning of initial heating from ambient temperature.

4. The method according to any of the preceding claims, wherein the first thermal treatment stage is preferably conducted with an average heating rate of max. 2.0°C/min, based on the total duration of the first thermal treatment stage.

5. The method according to any of the preceding claims, comprising heating the precursor from 50°C to 240°C with an average heating rate of max. 2.0°C/min, based on the total duration of said heating, preferably with vanadium(IV) oxalate as the vanadium(IV) complex.

6. The method according to claim 4 or 5, wherein at least a part of the first thermal treatment stage is conducted with a gas flow with a gas hourly space velocity of at least 12 h$^{-1}$; and wherein preferably the second thermal treatment stage gas is conducted with a gas flow with a gas hourly space velocity of at least 12 h$^{-1}$.

7. The method according to any of the preceding claims, wherein the first thermal treatment stage is conducted for at least a part with a gas flow comprising at least 1.0 vol.% $O_2$.

8. The method according to any of the preceding claims, wherein the method further comprises size reduction of the W-doped $VO_2$ particulate material.

9. The method according to any of the preceding claims, wherein the method further comprises providing a liquid composition comprising a liquid component, the W dopant, free organic complexing agent, and the vanadium(IV) complex, and removing liquid from said liquid composition to obtain a solid precursor material.

10. The method according to any of the preceding claims, wherein the solid material is kept in motion during at least a part of the first and/or second thermal treatment stage, preferably wherein the first and second stage are performed in a rotating furnace.

11. A W-doped $VO_2$ thermochromic particulate material obtainable by the method according to any of the preceding claims.

12. A W-doped $VO_2$ thermochromic particulate material exhibiting an enthalpy of thermochromic switching $H_{switch}$ above 20 J/g and a thermochromic switching temperature $T_{switch}$ for the switch from a monoclinic to a rutile phase between 10°C and 40°C, wherein at least 90 volume % of the particles have a particle size (largest dimension) of max. 100 nm, wherein the particle size is determined by laser diffraction.

**13.** The W-doped VO$_2$ thermochromic particulate material according to claim 12, wherein at least 90 volume % of the particles have a particle size of max. 75 nm, as determined by laser diffraction.

**14.** An article comprising the W-doped VO$_2$ thermochromic particulate material according to any of claims 11-13, wherein the article is preferably:

   - a polymer film or sheet comprising the W-doped VO$_2$ thermochromic particulate material, and a polymeric matrix;
   - a coated polymer film or sheet comprising a polymer film or sheet and a coating comprising the W-doped VO$_2$ thermochromic particulate material;
   - a glass pane comprising a glass substrate, and a thermochromic layer comprising the W-doped VO$_2$ thermochromic particulate material, wherein said thermochromic layer is provided directly or indirectly on the substrate and is selected from the group consisting of:

      - a polymer film or polymer sheet applied on or laminated with the substrate,
      - a coating applied on the substrate,
      - a coating applied on a polymer film or polymer sheet that is applied on or laminated with the substrate.

**15.** Method of manufacturing an article, comprising preparing a W-doped VO$_2$ thermochromic particulate material according to any of claims 1-10, and incorporating the W-doped VO$_2$ thermochromic particulate material into the article, wherein the article preferably has one or more of the features specified as preferred features in claim 14.

Europäisches
Patentamt

European
Patent Office

Office européen
des brevets

# EUROPEAN SEARCH REPORT

**Application Number**

EP 23 20 8845

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | US 2023/219841 A1 (BUSKENS PASCAL JOZEF PAUL [NL] ET AL) 13 July 2023 (2023-07-13) * paragraphs [0003], [0008], [0044] – [0048], [0057], [0065], [0066], [0070], [0077] * * paragraphs [0098], [0128] – [0131] * | 1-15 | INV. C01G31/02 C03C17/00 |
| X | CALVI LAVINIA ET AL: "The impact of bead milling on the thermodynamics and kinetics of the structural phase transition of VO2 particulate materials and their potential for use in thermochromic glazing", SOLAR ENERGY MATERIALS AND SOLAR CELLS, ELSEVIER SCIENCE PUBLISHERS, AMSTERDAM, NL, vol. 242, 11 May 2022 (2022-05-11), XP087059685, ISSN: 0927-0248, DOI: 10.1016/J.SOLMAT.2022.111783 [retrieved on 2022-05-11] * "Conclusion" * | 11-15 | |
| X | EP 3 936 480 A1 (TNO [NL]; CHEMELOT SCIENT PARTICIPATIONS B V [NL]) 12 January 2022 (2022-01-12) | 1-10 | TECHNICAL FIELDS SEARCHED (IPC) C01G H05B C03C |
| A | * paragraphs [0002], [0027] – [2935], [0038]; claims; examples 1,3 * | 11-15 | |
| A | KR 101 768 311 B1 (MAPRO CO LTD [KR]) 17 August 2017 (2017-08-17) * paragraphs [0045], [0058], [0063]; examples 2-3 * | 1-15 | |
| A | US 11 292 962 B2 (UNIV NEW YORK STATE RES FOUND [US]) 5 April 2022 (2022-04-05) * claims; figure 5 * | 1-15 | |

–/--

The present search report has been drawn up for all claims

| Place of search | Date of completion of the search | Examiner |
|---|---|---|
| Munich | 12 April 2024 | Nobis, Barbara |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

**page 1 of 2**

Europäisches
Patentamt

European
Patent Office

Office européen
des brevets

# EUROPEAN SEARCH REPORT

Application Number

EP 23 20 8845

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CN 116 812 978 A (UNIV XIAN ARCHITECTUR & TECH) 29 September 2023 (2023-09-29) * example 1 * | 1-15 | |

TECHNICAL FIELDS
SEARCHED        (IPC)

The present search report has been drawn up for all claims

| Place of search | Date of completion of the search | Examiner |
|---|---|---|
| Munich | 12 April 2024 | Nobis, Barbara |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

# EP 4 553 044 A1

## ANNEX TO THE EUROPEAN SEARCH REPORT
## ON EUROPEAN PATENT APPLICATION NO.

EP 23 20 8845

This annex lists the patent family members relating to the patent documents cited in the above-mentioned European search report.
The members are as contained in the European Patent Office EDP file on
The European Patent Office is in no way liable for these particulars which are merely given for the purpose of information.

12-04-2024

| Patent document cited in search report | | | Publication date | Patent family member(s) | | | Publication date |
|---|---|---|---|---|---|---|---|
| US 2023219841 | A1 | | 13-07-2023 | EP | 4157800 | A1 | 05-04-2023 |
| | | | | US | 2023219841 | A1 | 13-07-2023 |
| | | | | WO | 2021242109 | A1 | 02-12-2021 |
| EP 3936480 | A1 | | 12-01-2022 | EP | 3936480 | A1 | 12-01-2022 |
| | | | | EP | 4178915 | A1 | 17-05-2023 |
| | | | | US | 2023249979 | A1 | 10-08-2023 |
| | | | | WO | 2022010354 | A1 | 13-01-2022 |
| KR 101768311 | B1 | | 17-08-2017 | NONE | | | |
| US 11292962 | B2 | | 05-04-2022 | NONE | | | |
| CN 116812978 | A | | 29-09-2023 | NONE | | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20220306526 A1
- WO 2021242109 A1
- EP 3936480 A

**Non-patent literature cited in the description**

- CIE No. 15, Colorimetry, technical report. 2004
- *CIE No. 85, Solar spectral irradiance, technical report*, 1989